# EUROPÄISCHE PATENTSCHRIFT

(11) **EP 3 655 681 B1**
(45) Veröffentlichungstag und Bekanntmachung des Hinweises auf die Patenterteilung: **16.08.2023**
(21) Anmeldenummer: 18739521.5
(22) Anmeldetag: 09.07.2018
(51) Int. Cl.: F16J 15/324

(54) **DICHTUNGSVORRICHTUNG MIT KAVITÄTEN**
SEAL DEVICE HAVING CAVITIES
DISPOSITIF D'ÉTANCHÉITÉ COMPORTANT DES CAVITÉS

(30) Priorität: 21.07.2017 DE 102017116535
(43) Veröffentlichungstag der Anmeldung: 27.05.2020
(73) Patentinhaber: NIDEC GPM GmbH, 98673 Auengrund /OT Merbelsrod (DE)
(72) Erfinder: BERNER, Marcel, 98646 Hildburghausen (DE); LUDWIG, Paul, 99096 Erfurt (DE); EGERMEIER, Sebastian, 98646 Hildburghausen (DE); HOFFMANN, Florian, 98673 Schwarzbach (DE)
(74) Vertreter: Kuhnen & Wacker Patent- und Rechtsanwaltsbüro PartG mbB
(86) Internationale Anmeldenummer: PCT/EP2018/068546
(87) Internationale Veröffentlichungsnummer: WO 2019/016012

(56) Entgegenhaltungen:
- EP-A2- 1 378 691
- US-A- 2 489 715
- US-A1- 2013 154 192

## Beschreibung

Die vorliegende Erfindung betrifft eine Dichtungsvorrichtung zur hydraulischen Abdichtung von Dichtflächen an Bauelementen.

Im Stand der Technik sind Dichtungen bekannt, die zum Beispiel eine Welle oder einen Kolben in einem Gehäuse unter einer drehenden oder einer linearen Bewegung gegen eine Flüssigkeit abdichten.

Zwischen einer Gleitfläche der Dichtung und einer abzudichtenden Fläche des bewegten Bauelements bzw. Maschinenteils treten Reibkräfte aus Haft- und Gleitreibung auf, die in einem trockenen Zustand größer sind und in einem mit Flüssigkeit benetzten Zustand der Flächen geringer werden. Es ist bekannt, an Dichtungen ausgenommene Kavitäten vorzusehen, in denen sich eine Betriebsflüssigkeit ansammelt. Derartige Schmiertaschen, welche die Betriebsflüssigkeit aufnehmen, setzen unter einer geeignet ausgerichteten Druckeinwirkung einen Teil der angesammelten Betriebsflüssigkeit frei, wodurch ein hydrostatischer Schmierfilm zur dynamischen Abdichtung zwischen den Flächen gebildet wird. Anschließend sammelt sich der Schmierfilm während einer statischen Abdichtung wieder in den Kavitäten an.

Ferner führen die Kavitäten dazu, dass eine Gesamtfläche des Flächenkontakts zwischen der Dichtung und der abzudichtenden Fläche verringert wird, wodurch ein Adhäsionsanteil der Reibkraft gesenkt wird. Folglich können die Haft- und Gleitreibung zwischen der Dichtung und dem Maschinenteil gesenkt werden.

Dichtungsvorrichtungen mit Kavitäten in ihren Gleitflächen sind z. B. bekannt aus US 2013/0154192 A1.

Zudem kann eine Dichtungswirkung verbessert werden, da eine Betriebsflüssigkeit über eine Dichtungsstrecke von einem Ende bis zum anderen Ende einer Dichtung bzw. zwischen Dichtungslippen, Abschnitte mit dazwischenliegenden Druckdifferenzen passieren muss.

Aus der DE 101 20 403 B4 ist ein Dichtkörper, vorzugsweise eine Dichtmanschette mit einer Mikrorillierung bekannt. In einer Ausführung als Dichtmanschetten, weist diese radial umlaufende Mikrorillen auf, die über einen Endbereich einer Dichtlippe hinausgeführt sind, und einen Spalt zwischen zwei aneinander liegenden Flächen von Bauelementen gegenüber einem flüssigen oder gasförmigen Medium abdichten. Die Mikrorillen erhöhen die Gleitfähigkeit, indem Reibkräfte als Funktion des Drucks, der aus einer Bewegung resultiert, abgesenkt werden. Dabei werden die Haftreibung und die Gleitreibung gesenkt und das Niveau der Haftreibung an das Niveau der Gleitreibung angenähert.

Die EP 1 611 380 B1 offenbart eine Dichtungsanordnung auf Basis einer Nutring-Stangendichtung, die eine verbesserte Verschleißbeständigkeit aufweist. In einem untergeordneten, alternativen Aspekt wird beschrieben, dass an einer Innenfläche eine Mikrostruktur in der Form von Kugelkalotten angeordnet sein kann, die das Gleitverhalten des Nutrings auf der Stange verbessert. Weitergehende, strukturelle Details zu dem Vorsehen einer Mikrostruktur mit Kugelkalotten gehen hieraus nicht hervor.

Allerdings ist bei einer Struktur mit umlaufenden Mikrorillen die Funktion eines hydrostatischen Druckaufbaus für den Schmierfilm empfindlich gegenüber Beschädigungen wie Kratzern, die durch Fremdkörperartikel aus der umgebenden Betriebsflüssigkeit zwischen Kontaktflächen an den Mikrorillen verursacht werden können. Dabei führt eine lokale Leckagestelle an einer beliebigen Position, wie ein Kratzer bzw. Schnitt, der quer durch benachbarte Rillen verläuft, dazu, dass in jeder betroffenen Rille der gesamte Druck abfällt. Demzufolge wird im umlaufenden Bereich jeder betroffenen Rille kein hydrostatischer Schmierfilm aufgebaut und die Reibkräfte können zunehmen.

Die genannte Struktur von Kugelkalotten ist hingegen mit dem Nachteil behaftet, dass sie ein festes Verhältnis von der ausgenommenen Fläche einer Kavität und einer Tiefe der Kavität aufweist. Demzufolge kann die Struktur von Kugelkalotten ein anwendungsspezifisch ungünstiges Verhältnis zwischen einem Anteil von erhabenen und ausgenommenen Flächenabschnitten sowie der Tiefe der Kavitäten aufweisen.

Demnach besteht eine Aufgabe der vorliegenden Erfindung darin, eine Dichtungsvorrichtung mit Kavitäten zu schaffen, deren Druckaufbau eines hydrostatischen Schmierfilms unempfindlicher gegen lokale Beschädigungen wie insbesondere Kratzer durch Fremdkörperpartikel ist.

Eine weitere Aufgabe der vorliegenden Erfindung besteht darin, eine Dichtungsvorrichtung mit Kavitäten zu schaffen, deren Struktur eine Anwendungsoptimierung im Hinblick auf ein Flächenverhältnis von erhabenen und ausgenommen Abschnitten sowie einer Tiefe zulässt.

Die Aufgaben werden durch eine Dichtungsvorrichtung mit den Merkmalen des Anspruchs 1 oder den Merkmalen des Anspruchs 7 gelöst.

Die erfindungsgemäße Dichtungsvorrichtung zur hydraulischen Abdichtung von Dichtflächen an Bauelementen zeichnet sich insbesondere dadurch aus, dass die Konturen der Kavitäten eine längere Abmessung in einer Konturlängsrichtung und eine kürzere Abmessung in einer Konturquerrichtung aufweisen.

Die vorliegende Erfindung sieht erstmals eine Dichtungsvorrichtung zur hydraulischen Abdichtung vor, die sowohl eine geometrische Anwendungsoptimierung bezüglich erhabener Flächen, ausgenommener Flächen und einer Ausnehmungstiefe zulässt, und deren Funktion zum Aufbau eines hydrostatischen Drucks über eine gesamte Kontaktfläche gegenüber lokalen Kratzern und über benachbarte Kavitäten hinweg relativ unempfindlich ist. Dadurch kann in vorteilhafter Weise eine effektive und langlebige Funktionsweise zur Bereitstellung eines hydrostatischen Schmierfilms gewährleistet werden.

Ferner lässt die Dimensionierung der längeren Abmessung und der kürzeren Abmessung der jeweiligen Kontur eine Optimierung im Hinblick auf eine anwendungsspezifische Relativbewegungsrichtung zu. Dadurch wird im Vergleich zu einer Struktur mit Kugelkalotten eine richtungsabhängige Einstellung der Gleiteigenschaft zwischen der Dichtungsvorrichtung und einer abzudichtenden Fläche ermöglicht.

Vorteilhafte Weiterbildungen der Erfindung sind Gegenstand der abhängigen Ansprüche.

Gemäß einem ersten Aspekt der Erfindung weisen die Kavitäten eine elliptische Kontur auf.

Die elliptische Form der Kavität erzielt im Vergleich zu einer Kugelkalotte eine bessere Aufnahme von Schmutzpartikeln im Falle einer Kontamination der Betriebsflüssigkeit, da eine größere Erstreckung quer zur Relativbewegungsrichtung vorliegt. Dennoch gewährleisten die abgeschlossenen Konturen der elliptischen Kavitäten im Vergleich zu einer Rillenstruktur einen sicheren Aufbau eines hydrostatischen Schmierfilms bei einer Auslenkung zwischen dem Dichtungskörper und einem Bauelement oder einem Kratzer in einem dieser beiden Reibpartner.

Gemäß einem Aspekt der Erfindung können die Kavitäten in Bezug auf die Konturquerrichtung in der Richtung der Relativbewegung eines der Bauelemente ausgerichtet sein.

Durch die Ausrichtung der kürzeren Abmessung in Richtung der Relativbewegung wird eine höhere Sensibilität der Struktur hergestellt. Ferner wird ein Ansprechverhalten eines hydrostatischen Druckaufbaus aufgrund einer steileren Steigung von angrenzenden Stegen intensiviert, die unter der Einwirkung einer Relativbewegung stärker geneigt werden.

Gemäß einem Aspekt der Erfindung können in Konturquerrichtung benachbarte Kavitäten in der Konturlängsrichtung versetzt zueinander in der Gleitfläche ausgebildet sein.

Durch eine versetzte Anordnung wird die Dichte von Kavitäten pro Fläche, d.h. ein Flächenverhältnis von ausgenommener Fläche zu unbearbeiteter, erhabener Fläche vergrößert. In Kombination mit der elliptischen Kontur kann zugleich eine größere Überschneidung der Kavitäten in Bewegungsrichtung bereitgestellt werden, wodurch ein Auftreten von trockenlaufenden Bereichen der Gleitfläche des Dichtungskörpers weiter reduziert wird. Ferner wird durch eine Versetzung von benachbarten Kavitäten die Stabilität der Struktur, d.h. der erhabenen, stegförmigen Flächenanteile der Gleitfläche in einem mittleren Teil in Konturlängsrichtung erhöht.

Gemäß einem zweiten Aspekt der Erfindung weist der Dichtungskörper eine rotationssymmetrische Form auf, und bildet die wenigstens eine Gleitfläche eine Mantelfläche des Dichtungskörpers.

Auf diese Weise kann eine erfindungsgemäße Dichtungsvorrichtung für eine rotatorische Relativbewegung zwischen Bauelementen realisiert werden. Ebenso kann eine Dichtungsmanschetten für eine translatorische Relativbewegung zwischen Bauelementen, wie beispielsweise einem Gehäuse und einem Kolben realisiert werden.

Gemäß dem zweiten Aspekt der Erfindung weisen alle Kavitäten eine gemeinsame Konturlängsrichtung auf, die in Bezug zu einer Mittelachse des rotationssymmetrischen Dichtungskörpers spiralförmig verläuft.

Durch diese Anordnung der Kavitäten kann bei einer festgelegten Abmessung der Kavitätsquerrichtung, ein Flächenverhältnis von ausgenommener Fläche zu unbearbeiteter Gleitfläche maximiert werden.

Gemäß einem alternativen Aspekt der Erfindung kann entlang einer Mittelachse des rotationssymmetrischen Dichtungskörpers eine Vielzahl von radial umlaufenden Konturlängsrichtungen angeordnet sein, und die Kavitäten können entlang der Konturlängsrichtungen radial verteilt ausgebildet sein.

Durch diese Anordnung von Kavitäten kann ebenfalls das Flächenverhältnis von ausgenommener Fläche zu unbearbeiteter Gleitfläche maximiert werden.

Gemäß einem anderen Aspekt der Erfindung können sich die Kavitäten in Bezug auf die Ausrichtung der Kontur voneinander unterscheiden.

Die Ausrichtungen der Konturen in der Gesamtheit der elliptischen Kavitäten erlaubt z.B. eine Verschleißoptimierung auf nichtlineare Bewegungen oder eine Dämpfung von Resonanzen auf geschwindigkeitsabhängige Schwingungsanregungen, die aus einem Adhäsionsanteil und einem Hystereseanteil der Reibkräfte resultieren, wie später erläutert wird.

Gemäß dem ersten Aspekt der Erfindung weist die Dichtungsvorrichtung wenigstens zwei unterschiedliche Gruppen von Kavitäten mit gleicher Ausrichtung der Kontur auf.

Eine reduzierte Vielfalt von ausgewählten Ausrichtungen der Konturen in der Gesamtheit der Kavitäten senkt die Komplexität des Strukturmusters und der Herstellung der Dichtungsvorrichtung bzw. eines entsprechenden Formwerkzeugs für einen Gussprozess.

Gemäß dem ersten Aspekt der Erfindung unterscheiden sich die Kavitäten in Bezug auf die Abmessungen der Kontur voneinander.

Durch unterschiedliche Größen und dementsprechenden Tiefen der Kavitäten kann ein Verschleißverlauf bzw. die Größe einer verbleibenden Gleitfläche im Verhältnis zu einer Abnutzungstiefe an dem Dichtungskörper realisiert werden. So kann eine primäre Verschleißphase mit intakten kleineren Kavitäten bis zu einer geringeren Tiefe sowie eine sekundäre Verschleißphase mit einer Notfunktion durch verbliebene tiefere Abschnitte von größeren Kavitäten vorgesehen werden.

Darüber hinaus kann durch die Bereitstellung von Kavitäten in verschiedenen Größen das resultierende Verhalten eines hydrostatischen Druckaufbaus bei einem Richtungswechsel oder einem Geschwindigkeitsbereich der Relativbewegung, in Bezug auf die Haftreibung oder Gleitreibung gezielt beeinflusst und eingestellt werden.

Gemäß einem Aspekt der Erfindung weist die Dichtungsvorrichtung wenigstens zwei unterschiedliche Gruppen von Kavitäten mit gleichen Abmessungen der Kontur auf.

Eine reduzierte Vielfalt von ausgewählten Größen der Konturen senkt die Komplexität des Strukturmusters und der Herstellung der Dichtungsvorrichtung bzw. eines entsprechenden Formwerkzeugs für einen Gussprozess.

Gemäß einem Aspekt der Erfindung können die Kavitäten in Bezug zur Gleitfläche eine Tiefe von 10 bis 40µm aufweisen.

Innerhalb des genannten Bereichs kann die Tiefe der Kavitäten kapillar wirksam auf verschiedene Anwendungsbereiche, insbesondere verschiedene flüssige Medien vorteilhaft eingestellt werden.

Gemäß einem Aspekt der Erfindung kann die kürzere Abmessung in der Konturquerrichtung der Kavitäten eine maximale Abmessung von 15 bis 200 µm aufweisen.

Im Rahmen des genannten Bereichs kann ebenso das Auslöseverhalten eines hydrostatischen Schmierfilms infolge des aufgenommenen Volumens optimiert eingestellt werden.

Gemäß einem Aspekt der Erfindung kann ein Verhältnis der längeren Abmessung in der Konturlängsrichtung zu der kürzeren Abmessung in der Konturquerrichtung einen Wert von 3 bis 6 betragen.

Gemäß einem Aspekt der Erfindung können die Konturen der Kavitäten an einer Übergangskante zu der Gleitfläche abgerundet sein. Eine derartige Verrundung zwischen den Kavitäten und der Gleitfläche ist sowohl für das Gleitverhalten in Lastfällen als auch bei der Entformung des Dichtungskörpers aus dem Formwerkzeugs im Fertigungsprozess vorteilhaft.

In diesem Bereich des Abmessungsverhältnisses wurden durch Simulationen und Experimente, bevorzugte dynamische Dichtungseigenschaften im Hinblick auf eine anwendungsnahe Bandbreite an Oberflächenrauigkeiten und Gleitgeschwindigkeiten ermittelt.

Die Erfindung wird nachfolgend anhand von Ausführungsbeispielen in den begleitenden Figuren näher erläutert. Es zeigt:
- Fig. 1: ein Strukturmuster mit zueinander versetzten Kavitäten, die eine elliptische Kontur zur Gleittläche des Dichtungskörpers bilden, aber kein Teil der beanspruchten Erfindung ist;
- Fig. 2: ein Strukturmuster mit einer regelmäßigen Anordnung aus zwei Gruppen von elliptischen Kavitäten unterschiedlicher Größe;
- Fig. 3A: ein Strukturmuster aus Kavitäten mit unterschiedlich ausgerichteten Konturen und unterschiedlichen Größen, das im Querschnitt und einer Draufsicht dargestellt ist;
- Fig. 3B: ein Querschnitt, der dem Strukturmusters aus Fig. 3A entlang der Linie A - A entnommen ist; und
- Fig. 4: ein Strukturmuster auf einem rotationssymmetrischen Dichtungskörper, wobei entweder alle Kavitäten auf einer gemeinsamen spiralförmigen Konturlängsrichtung, oder senkrecht zu einer Mittelachse des Dichtungskörpers parallel angeordnet sind.

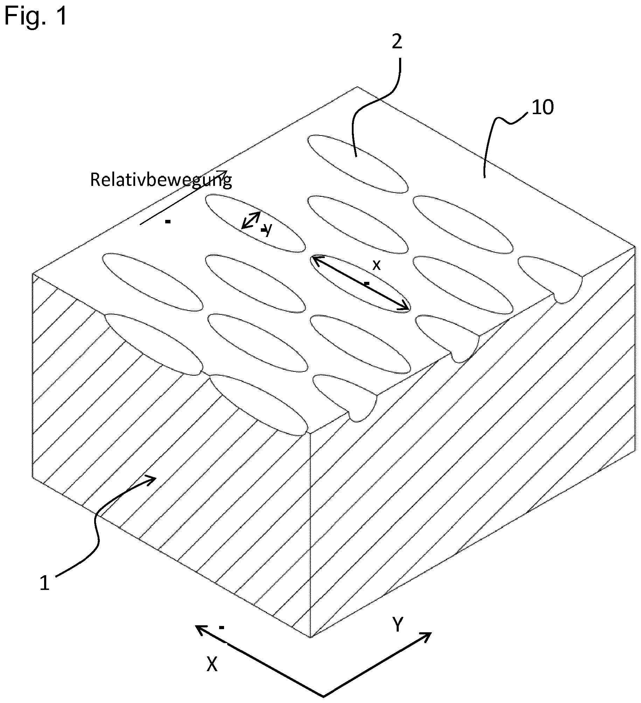

Nachstehend wird eine erste, nicht beanspruchte, Ausführungsform der Dichtungsvorrichtung mit Bezug auf Fig. 1 beschrieben.

In der Regel wird durch die erfindungsgemäße Dichtungsvorrichtung ein Spalt zwischen zwei gegeneinander bewegbaren Bauelementen, wie z.B. einem Kolben oder einer Welle und einer Durchtrittsöffnung, gegen eine Leckage einer Flüssigkeit abgedichtet. In der vorliegenden Offenbarung wird demnach unter einer Dichtfläche eine Oberfläche eines Bauelementes verstanden, an der bestimmungsgemäß eine Abdichtung erfolgen soll und zu diesem Zweck der Dichtungsvorrichtung zugewandt und zugeordnet ist.

In Fig. 1 ist ein Ausschnitt eines Dichtungskörpers 1 im Schnittbild gezeigt. Der Dichtungskörper 1 weist eine Gleitfläche 10 auf, die mit einer abzudichtenden Fläche eines Bauelementes (nicht dargestellt), wie beispielsweise einem Kolben oder einer Welle oder dergleichen in Flächenkontakt gebracht wird, um einen flüssigkeitsführenden bzw. fluidführenden Bereich abzudichten. Wenn das Bauelement ein bewegtes Bauelement ist, wird der Dichtungskörper 1 beispielsweise derart ausgerichtet angebracht, dass eine Relativbewegung der abzudichtenden Fläche des Bauelementes zu der Gleitfläche 10 des Dichtungskörpers 1 in der dargestellten Richtung verläuft.

In der Gleitfläche 10 ist eine Struktur, insbesondere eine Mikrostruktur mit Kavitäten 2 ausgebildet, die dazu dienen, einen hydrostatischen Schmierfilm gegenüber einer abzudichtenden Fläche eines Bauelements mit einer umgebenden Betriebsflüssigkeit zu bilden. Genauer genommen nehmen die Kavitäten 2 eine gegen Leckage abzudichtende Betriebsflüssigkeit über einen Dichtungsspalt zwischen der Gleitfläche 10 und der abzudichtenden Fläche auf. Die aufgenommene Betriebsflüssigkeit wird, durch eine Kapillarwirkung der Kavitäten begünstigt, gespeichert bzw. in diesen gehalten.

Die Kavitätsstruktur liegt komplementär in einem Gusswerkzeug (nicht dargestellt) vor. Die Dichtungskörper 1 mit der Mikrostruktur werden in dem Gusswerkzeug abgegossen, d.h. in einem Urformverfahren hergestellt, wobei die Kavitäten 2 durch entsprechende noppenförmige Erhebungen seitens des Gusswerkzeugs beim Gießen eingebracht werden.

Der Dichtungskörper 1 besteht aus einem zähelastischen Material, wie einem Elastomer mit einer Härte, die bei Verwendung eines Messverfahrens mit Shore A Einheiten einen Wert von weniger als 100, vorzugsweise von weniger als 90, beispielsweise einen Wert zwischen 50 und 85 Einheiten, oder dergleichen in einem äquivalenten Messverfahren in Bezug auf die Materialhärte aufweist. Wenn durch eine Bewegung des Bauelements (nicht dargestellt) eine Richtungskomponente senkrecht zur Ebene der Gleitfläche 10 Druck auf die Kavitäten 2 ausübt, oder aufgrund von Haft- oder Gleitreibung Scherkräfte in der Ebenenrichtung der Gleitfläche 10 auf verbleibende Abschnitte bzw. Stege des Dichtungskörpers 1 zwischen den Kavitäten 2 wirken, werden die Kavitäten 2 verformt.

Die Verformung führt zu einer Verringerung der Volumina der Kavitäten 2, wodurch ein Teil der kapillar gehaltenen Betriebsflüssigkeit in den Dichtungsspalt zwischen der Gleitfläche 10 und der abzudichtenden Fläche des Bauelementes abgegeben wird. Infolge eines unveränderten oder lokal verringerten Spaltmaßes, bildet sich mit der abgegebenen Betriebsflüssigkeit ein hydrostatischer Schmierfilm zwischen der Gleitfläche 10 und der abzudichten Fläche aus. Dabei sorgt ein lokal höherer Druck für eine partiell größere Strukturverformung der Kavitäten 2 und eine dementsprechend höhere Volumenabgabe der darin gehaltenen Betriebsflüssigkeit, die zum Druckaufbau des Schmierfilms beiträgt. Nach einer Bewegung nehmen die Kavitäten 2 in dem größeren Volumen der reversiblen Ursprungsform wieder Betriebsflüssigkeit aus dem Dichtungsspalt auf, wodurch ein hydrostatischer Druck abnimmt und sich der Schmierfilm bzw. dessen temporäre Erhöhung wieder verringert.

Der hydrostatische Schmierfilm setzt eine Haft- und Gleitreibung zwischen dem Dichtungskörper 1 und dem Bauelement herab, wodurch sich die erfindungsgemäße Dichtungsvorrichtung insbesondere zur hydraulischen Abdichtung von linear verfahrbaren oder rotierenden Bauelementen in Anwendungen eignet, in denen Leichtlaufeigenschaften oder eine hohe Verschleißbeständigkeit zugunsten der Lebensdauer und Betriebssicherheit bevorzugt werden.

Die Kavitäten 2 weisen eine längliche Gestalt mit einer längeren Abmessung x und einer kürzeren Abmessung y auf, deren funktionale Anordnung einheitlich ausgerichtet ist. Die in Fig. 1 dargestellte Ausführungsform weist Kavitäten 2 auf, deren Hohlkörper in der Form von elliptischen Halbkörpern ausgebildet sind, wie anhand der elliptisch abzeichnenden Konturen an der Gleitfläche 10 zu sehen ist. Alle Kavitäten 2 der Mikrostruktur sind bezüglich der längeren Abmessung x und der quer dazu verlaufenden kürzeren Abmessung x in einer gemeinsamen Konturlängsrichtung X und einer gemeinsamen Konturquerrichtung Y ausgerichtet angeordnet. Dabei ist es funktional vorteilhaft, wenn die Anordnung der Kavitäten 2 derart ausgerichtet ist, dass die Richtung der Relativbewegung des Bauelementes senkrecht zu der gemeinsamen Konturlängsrichtung X, d.h. in der gemeinsamen Konturquerrichtung Y verläuft. Auf diese Weise wird ein sensibleres Verformungsverhalten in Bezug auf eine mit dem Pfeil B dargestellte Richtungskomponente genutzt, um ein besseres Ansprechverhalten des hydrostatischen Druckaufbaus infolge der abgegebenen Betriebsflüssigkeit aus den verformten Kavitäten 2 zu erreichen.

Durch eine versetzte Anordnung benachbarter Kavitäten 2, wird eine höhere Dichte von Kavitäten 2 auf der Gleitfläche 10 und eine gleichmäßigere Stärke der dazwischen verbleibenden Abschnitte bzw. Stege realisiert.

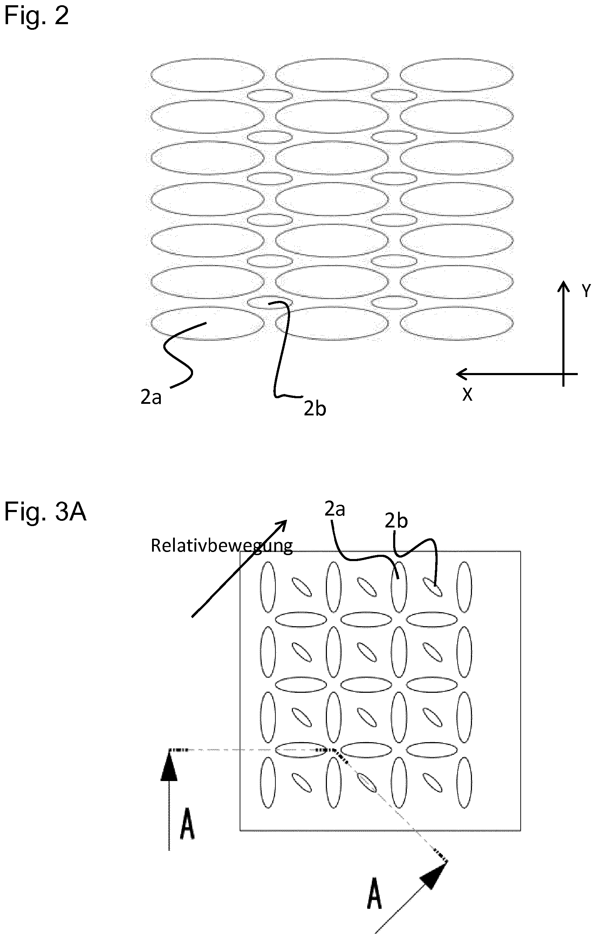

Fig. 2 zeigt eine zweite, erfindungsgemäße, Ausführungsform einer Struktur von Kavitäten 2, wobei diese in zwei verschiedene Gruppen mit großen elliptischen Kavitäten 2a und kleinen elliptischen Kavitäten 2b aufgeteilt sind. Die großen Kavitäten 2a und die kleinen Kavitäten 2b der beiden Gruppen sind wiederum versetzt zueinander und alternierend aufeinanderfolgend derart angeordnet, dass bezüglich der Gruppe der großen Kavitäten 2a und der Gruppe der kleinen Kavitäten 2b, sowohl in Richtung der gemeinsamen Kavitätslängsrichtung X beider Gruppen als auch der gemeinsamen Kavitätsquerrichtung Y beider Gruppen, parallel zueinander verlaufende Reihen gebildet werden.

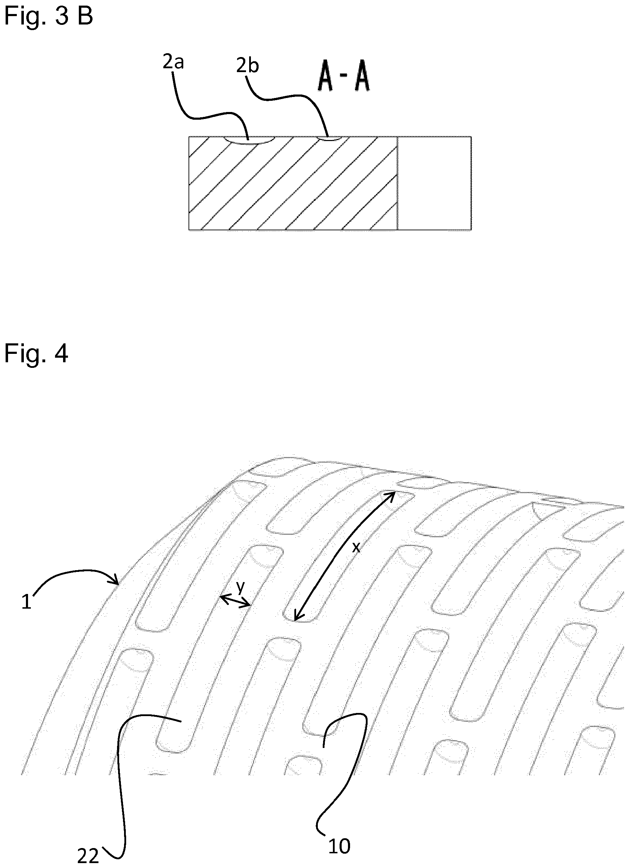

Durch die Bereitstellung verschieden großer Kavitäten 2a, 2b und den sich daraus ergebenden Verformungseigenschaften der jeweiligen Hohlkörper, kann ein anwendungsoptimiertes Ansprechverhalten des hydrostatischen Schmierfilms in Bezug auf die Haft- und/oder Gleitreibung eingestellt werden. Ferner kann ein Änderungsverlauf der Größe der Gleitfläche 10 und deren Reibung mit zunehmender Abnutzungstiefe des Dichtungskörpers anhand der Aufteilung und Tiefen der Kavitäten vorgesehen werden, wie aus Fig. 3 B hervorgeht.

Alternativ zu dem dargestellten Strukturmuster können ebenso mehr als zwei Gruppen von verschiedenen Kavitätsgrößen sowie eine andere Anordnung bzw. Abfolge der verschiedenen Kavitäten 2 angeordnet sein.

In Fig. 3 ist eine dritte, erfindungsgemäße, Ausführungsform eines Strukturmusters dargestellt, das sowohl verschiedene Kavitätsgrößen und Tiefen als auch verschiedene Ausrichtungen der elliptischen Konturen bezüglich der jeweiligen Konturlängsrichtung bzw. Konturquerrichtung aufweist. Durch das Strukturmuster der dritten Ausführungsform wird eine Optimierung in Bezug auf eine Oberflächenrauigkeit des abzudichtenden Bauelementes möglich.

Die wirkenden Reibkräfte an der Gleitfläche 10 des Dichtungskörpers 1 lassen sich in Adhäsions- und Hysterese-Komponenten aufteilen. Der Adhäsionsanteil, der auch für die Haftreibung ausschlaggebend ist, kann auf eine statistische Bildung und ein Wiederaufbrechen von adhäsiven Verbindungen zwischen dem Elastomer und dem Bauelement zurückgeführt werden und hängt von der Flächengröße der verbleibenden Gleitfläche 10 zwischen den Kavitäten 2 ab. Der Hystereseanteil einer Reibkraft resultiert aus Deformationen des Elastomers, die mit einer Energiedissipation einhergehen. Durch eine Oberflächenrauigkeit der abzudichtenden Fläche des Bauelements, die mit einer Eindringtiefe bzw. Amplitude lokaler Deformationen an der Gleitfläche 10 der Dichtungsvorrichtung korreliert, und durch eine Geschwindigkeit der Relativbewegung, aus der eine Häufigkeit bzw. Frequenz lokaler Deformationen resultiert, werden an einer Kontaktfläche Spannungen und Relaxationen angeregt.

Ein veranschaulichender Extremfall hierzu wäre eine quer zur Relativbewegung verlaufende Kante oder sonstige Erhebung in der abzudichtenden Fläche des Bauelementes. Das kurzzeitige Eintauchen einer solchen Gegenkontur in die Kavitäten weist in der Konturquerrichtung einer elliptischen Kavität ein steileres Einfädeln als in der Konturlängsrichtung auf, was folglich zu einer höheren Reibkraft und einem höheren Verschleiß bis hin zu einem Abscheren einer Konturkante führen kann. Durch einen Winkel zwischen Konturquerrichtung und der Relativbewegung wird ein sanfteres Einfädeln der Gegenkontur in und aus der elliptischen Kontur der Kavität erzielt.

Das abgebildete Strukturmuster mit elliptischen Konturen in verschiedener Ausrichtung zu der Relativbewegung des abzudichtenden Bauelements erzielt eine Streuung des lokalen elastischen Reaktionsverhaltens auf die Spannungen und Relaxationen an der verbleibenden Gleitfläche 10, das auf einen anwendungsbezogenen Betriebsbereich von Parametern eingestellt werden kann.

In einer alternativen Ausgestaltung der zweiten und dritten Ausführungsform kann sich das Strukturmuster aus Kavitäten mit sowohl unterschiedlichen Größen als auch unterschiedlichen Ausrichtungen der Kontur zusammensetzen.

Fig. 4 zeigt eine vierte, erfindungsgemäße, Ausführungsform eines Strukturmusters auf einem rotationssymmetrischen bzw. zylinderförmigen Dichtungskörper 1. Bei dieser Ausführungsform ist die kürzere Abmessung y der Kavitäten 22 nahezu über die gesamte längere Abmessung x konstant. Somit zeichnet sich an der Gleitfläche 10 die Form eines Langlochs ab anstatt einer elliptischen Form wie bei der ersten und zweiten Ausführungsform. Dabei weisen alle Kavitäten 22 dieselbe kürzere Abmessung y auf und sind in einer gemeinsamen spiralförmigen Konturlängsrichtung X nacheinander auf der mantelförmigen Gleitfläche 10 des Dichtungskörpers 1 angeordnet. Dadurch entsteht ein Strukturmuster, das mit einem durch Segmente unterteilten Gewinde vergleichbar ist, wobei die in Konturquerrichtung Y begrenzenden Stege von jeder Kavität 22 dem Außengewinde eines Gewindebolzens entsprechen. Dementsprechend verläuft die gemeinsame Konturlängsrichtung X nicht rechtwinklig zur Mittelachse des Dichtungskörpers 1, sondern mit einer geringfügigen Neigung, entsprechend einer Gewindesteigung.

Alternativ kann die dargestellte Anordnung sinngemäß ebenso umgekehrt werden, sodass die Gleitfläche 10 mit den Kavitäten 22 an einer inneren Mantelfläche eines rotationssymmetrischen Dichtungskörpers 1, und eine abzudichten Fläche an einer äußeren Mantelfläche eines zylinderförmigen Bauelementes angeordnet ist.

In einer alternativen Ausgestaltung der vierten Ausführungsform aus Fig. 4 sind alle Kavitäten 22 bezüglich ihrer Konturlängsrichtung X senkrecht zur Mittelachse des Dichtungskörpers 1, d.h. mit der Konturquerrichtung zur Relativbewegung des Bauelements ausgerichtet. Somit liegt ein Strukturmuster vor, bei dem ringförmige Abfolgen von Kavitäten 22 parallel zueinander benachbart, entlang der Mittelachse des Dichtungskörpers 1 angeordnet sind.

Die längere Abmessung x der einzelnen Kavitäten 22 kann individuell unterschiedlich gewählt sein. Beispielsweise kann, ähnlich wie bei der zweiten Ausführungsform, eine Abfolge von Kavitäten 22 aus Gruppen mit unterschiedlicher Abmessung x in Konturlängsrichtung X ausgebildet sein, um durch die verschiedenen Seitenverhältnisse wiederum verschiedene Verformungsverhalten zu erzielen, durch die in der Gesamtheit ein anwendungsoptimiertes Ansprechverhalten des hydrostatischen Schmierfilms in Bezug auf eine Haft- und/oder Gleitreibung einstellbar ist.

Abweichend zu der Darstellung aus Fig. 4 kann das Strukturmuster der vierten Ausführungsform und deren alternative Ausgestaltung, ebenso durch Kavitäten 22 aus Gruppen mit unterschiedlichen Abmessungen y in Konturquerrichtung Y und unterschiedlicher Ausrichtung realisiert werden, wodurch unterschiedliche dazwischenliegende Abschnitte bzw. Stege verschiedene Verformungsverhalten erzielen. Darüber hinaus kann das Strukturbild der dritten Ausführungsform und deren alternative Ausgestaltung anstatt mit Kavitäten 22 durch Kavitäten 2 mit elliptischer Kontur in gleicher oder unterschiedlicher Größe, oder durch eine Kombination von Kavitäten 22 in der Form eines Langlochs und elliptischen Kavitäten 2 realisiert werden.

Umgekehrt kann die Strukturmuster der ersten, nicht beanspruchten, durch Kavitäten 22 in der Form eines Langlochs oder in einer Kombination mit diesen umgesetzt werden.

## Patentansprüche

1. Dichtungsvorrichtung zur hydraulischen Abdichtung von Dichtflächen an Bauelementen, die in einer translatorischen oder rotatorischen Relativbewegung zueinander beweglich sind, aufweisend:
einen zähelastischen Dichtungskörper (1) mit wenigstens einer Gleitfläche (10),
die wenigstens einer Dichtfläche eines der Bauelemente zugeordnet werden kann; wobei
in der wenigstens einen Gleitfläche (10) eine Vielzahl von Kavitäten (2a, 2b) ausgebildet ist, die voneinander abgegrenzte, geschlossene Konturen zur Gleitfläche (10) aufweisen;
wobei
die Konturen der Kavitäten (2a, 2b) eine längere Abmessung (x) in einer Konturlängsrichtung (X) und eine kürzere Abmessung (y) in einer Konturquerrichtung (Y) aufweisen; **dadurch gekennzeichnet, dass**
die Kavitäten (2a, 2b) eine elliptische Kontur aufweisen und sich in Bezug auf die Abmessungen (x, y) der Kontur voneinander unterscheiden, und
die Dichtungsvorrichtung wenigstens zwei unterschiedliche Gruppen von Kavitäten (2a, 2b) mit gleichen Abmessungen (x, y) der Kontur aufweist.

2. Dichtungsvorrichtung nach Anspruch 1, wobei die Kavitäten (2; 2a, 2b) in Bezug auf die Konturquerrichtung (Y) im Gebrauch in der Richtung einer Relativbewegung eines der Bauelemente ausgerichtet sind.

3. Dichtungsvorrichtung nach Anspruch 2, wobei in Konturquerrichtung (Y) benachbarte Kavitäten (2; 2a, 2b) in der Konturlängsrichtung (X) versetzt zueinander in der Gleitfläche (10) ausgebildet sind.

4. Dichtungsvorrichtung nach einem der Ansprüche 1 bis 3, wobei der Dichtungskörper (1) eine rotationssymmetrische Form aufweist, und die wenigstens eine Gleitfläche (10) eine Mantelfläche des Dichtungskörpers (1) bildet.

5. Dichtungsvorrichtung nach einem der Ansprüche 1 bis 4, wobei sich die Kavitäten (2; 2a, 2b) in Bezug auf die Ausrichtung der Kontur voneinander unterscheiden.

6. Dichtungsvorrichtung nach Anspruch 5, aufweisend wenigstens zwei unterschiedliche Gruppen von Kavitäten (2; 2a, 2b) mit gleicher Ausrichtung der Kontur.

7. Dichtungsvorrichtung zur hydraulischen Abdichtung von Dichtflächen an Bauelementen, die in einer translatorischen oder rotatorischen Relativbewegung zueinander beweglich sind, aufweisend:
einen zähelastischen Dichtungskörper (1) mit wenigstens einer Gleitfläche (10),
die wenigstens einer Dichtfläche eines der Bauelemente zugeordnet werden kann; wobei
in der wenigstens einen Gleitfläche (10) eine Vielzahl von Kavitäten (22) ausgebildet ist, die voneinander abgegrenzte, geschlossene Konturen zur Gleitfläche (10) aufweisen;
**dadurch gekennzeichnet, dass**
der Dichtungskörper (1) eine rotationssymmetrische Form aufweist, und die wenigstens eine Gleitfläche (10) eine Mantelfläche des Dichtungskörpers (1) bildet;
die Konturen der Kavitäten (22) eine längere Abmessung (x) in einer Konturlängsrichtung (X) und eine kürzere Abmessung (y) in einer Konturquerrichtung (Y) aufweisen; und
alle Kavitäten (22) eine gemeinsame Konturlängsrichtung (X) aufweisen, die in Bezug zu einer Mittelachse des rotationssymmetrischen Dichtungskörpers (1) spiralförmig verläuft.

8. Dichtungsvorrichtung nach einem der Ansprüche 1 oder 7, wobei die Kavitäten (2; 2a, 2b; 22) in Bezug zur Gleitfläche eine Tiefe von 10 bis 40µm aufweisen.

9. Dichtungsvorrichtung nach einem der Ansprüche 1 oder 7, wobei die kürzere Abmessung (y) in der Konturquerrichtung (Y) der Kavitäten (2; 2a, 2b; 22) eine maximale Abmessung von 15 bis 200 µm aufweist.

10. Dichtungsvorrichtung nach einem der Ansprüche 1 oder 7, wobei ein Verhältnis der längeren Abmessung (x) in der Konturlängsrichtung (X) zu der kürzeren Abmessung (y) in der Konturquerrichtung (Y) einen Wert von 3 bis 6 beträgt.

11. Dichtungsvorrichtung nach einem der Ansprüche 1 oder 7, wobei die Konturen der Kavitäten (2; 2a, 2b; 22) an einer Übergangskante zu der Gleitfläche (10) abgerundet sind.

## Claims

1. A sealing device for hydraulically sealing surfaces on components which can be moved relative to one another in a translational or rotatory relative movement, comprising:
a viscoplastic sealing body (1) with at least one sliding surface (10) which can be assigned to at least one sealing surface of one of the components; wherein
there is formed in the at least one sliding surface (10) a plurality of cavities (2a, 2b) which have closed contours, separated from one another, in relation to the sliding surface (10);
wherein
the contours of the cavities (2a, 2b) have a longer dimension (x) in a contour longitudinal direction (X) and a shorter dimension (y) in a contour transverse direction (Y); **characterized in that**
the cavities (2a, 2b) have an elliptical contour and differ from one another in relation to the dimensions (x, y) of the contour, and
the sealing device has at least two different groups of cavities (2a, 2b) with the same dimensions (x, y) of the contour.

2. The sealing device according to Claim 1, wherein the cavities (2; 2a, 2b), when in use, are aligned in the direction of a relative movement of one of the components in relation to the contour transverse direction (Y).

3. The sealing device according to Claim 2, wherein cavities (2; 2a, 2b) that are adjacent to one another in the contour transverse direction (Y) are configured to be offset from one another in the sliding surface (10) in the contour longitudinal direction (X).

4. The sealing device according to any of Claims 1 to 3, wherein the sealing body (1) has a rotationally symmetric shape, and the at least one sliding surface (10) forms a lateral surface of the sealing body (1).

5. The sealing device according to any of Claims 1 to 4, wherein the cavities (2; 2a, 2b) differ from one another in relation to the alignment of the contour.

6. The sealing device according to Claim 5, having at least two different groups of cavities (2; 2a, 2b) with the same alignment of the contour.

7. A sealing device for hydraulically sealing surfaces on components which can be moved relative to one another in a translational or rotatory relative movement, comprising:
a viscoelastic sealing body (1) with at least one sliding surface (10) which can be assigned to at least one sealing surface of one of the components; wherein
there is formed in the at least one sliding surface (10) a plurality of cavities (22) which have closed contours, separated from one another, in relation to the sliding surface (10);
**characterized in that**
the sealing body (1) has a rotationally symmetric shape, and the at least one sliding surface (10) forms a lateral surface of the sealing body (1);
the contours of the cavities (22) have a longer dimension (x) in a contour longitudinal direction (X) and a shorter dimension (y) in a contour transverse direction (Y); and
all of the cavities (22) have a common contour longitudinal direction (X) which extends in a spiral shape in relation to a centre axis of the rotationally symmetric sealing body (1).

8. The sealing device according to any of Claims 1 or 7, wherein the cavities (2; 2a, 2b; 22) have a depth of 10 to 40 µm in relation to the sliding surface.

9. The sealing device according to any of Claims 1 or 7, wherein the shorter dimension (y) in the contour transverse direction (Y) of the cavities (2; 2a, 2b; 22) has a maximum dimension of 15 to 200 µm.

10. The sealing device according to any of Claims 1 or 7, wherein a ratio of the longer dimension (x) in the contour longitudinal direction (X) to the shorter dimension (y) in the contour transverse direction (Y) is a value of 3 to 6.

11. The sealing device according to any of Claims 1 or 7, wherein the contours of the cavities (2; 2a, 2b; 22) are rounded at a transitional edge to the sliding surface (10).

## Revendications

1. Dispositif d'étanchéité pour l'étanchéification hydraulique de surfaces d'étanchéité sur des composants qui sont mobiles les uns par rapport aux autres dans un mouvement relatif de translation ou de rotation, comprenant:
un corps d'étanchéité viscoplastique (1) avec au moins une surface de glissement (10) qui peut être associée à au moins une surface d'étanchéité de l'un des composants; où
dans la au moins une surface de glissement (10), une multiplicité de cavités (2a, 2b) sont formées, qui présentent des contours fermés, délimités les uns des autres, vers la surface de glissement (10);
où
les contours des cavités (2a, 2b) présentent une plus grande dimension (x) dans une direction longitudinale de contour (X) et une plus petite dimension (y) dans une direction transversale de contour (Y); **caractérisé en ce que**
les cavités (2a, 2b) présentent un contour elliptique et diffèrent entre elles par les dimensions (x, y) du contour, et
le dispositif d'étanchéité présente au moins deux groupes différents de cavités (2a, 2b) ayant les mêmes dimensions (x, y) du contour.

2. Dispositif d'étanchéité selon la revendication 1, où les cavités (2; 2a, 2b) sont orientées dans la direction d'un mouvement relatif de l'un des composants par rapport à la direction transversale de contour (Y) pendant l'utilisation.

3. Dispositif d'étanchéité selon la revendication 2, où dans la direction transversale de contour (Y) des cavités (2; 2a, 2b) voisines sont agencées décalées entre elles dans la direction longitudinale de contour (X) dans la surface de glissement (10).

4. Dispositif d'étanchéité selon l'une des revendications 1 à 3, où le corps d'étanchéité (1) présente une forme à symétrie de rotation, et la au moins une surface de glissement (10) forme une surface latérale du corps d'étanchéité (1).

5. Dispositif d'étanchéité selon l'une des revendications 1 à 4, où les cavités (2; 2a, 2b) diffèrent les unes des autres dans l'orientation du contour.

6. Dispositif d'étanchéité selon la revendication 5, comprenant au moins deux groupes différents de cavités (2; 2a, 2b) avec la même orientation du contour.

7. Dispositif d'étanchéité pour l'étanchéification hydraulique de surfaces d'étanchéité sur des composants qui sont mobiles les uns par rapport aux autres dans un mouvement relatif de translation ou de rotation, comprenant:
un corps d'étanchéité viscoplastique (1) avec au moins une surface de glissement (10), qui peut être associée à au moins une surface d'étanchéité de l'un des composants, où
dans la au moins une surface de glissement (10), une multiplicité de cavités (22) sont formées, qui présentent des contours fermés, délimités les uns des autres, vers la surface de glissement (10);
**caractérisé en ce que**
le corps d'étanchéité (1) présente une forme à symétrie de rotation, et la au moins une surface de glissement (10) forme une surface latérale du corps d'étanchéité (1);
les contours des cavités (22) présentent une plus grande dimension (x) dans une direction longitudinale de contour (X) et une plus petite dimension (y) dans une direction transversale de contour (Y); et
toutes les cavités (22) présentent une direction longitudinale de contour commune (X), qui s'étend en spirale par rapport à un axe central du corps d'étanchéité à symétrie de rotation (1).

8. Dispositif d'étanchéité selon l'une des revendications 1 ou 7, où les cavités (2; 2a, 2b; 22) présentent une profondeur de 10 à 40 µm par rapport à la surface de glissement.

9. Dispositif d'étanchéité selon l'une des revendications 1 ou 7, où la plus petite dimension (y) dans la direction transversale de contour (Y) des cavités (2; 2a, 2b; 22) présente une dimension maximale de 15 à 200 µm.

10. Dispositif d'étanchéité selon l'une des revendications 1 ou 7, où un rapport de la plus grande dimension (x) dans la direction longitudinale de contour (X) à la plus petite dimension (y) dans la direction transversale de contour (Y) a une valeur de 3 à 6.

11. Dispositif d'étanchéité selon l'une des revendications 1 ou 7, où les contours des cavités (2; 2a, 2b; 22) sont arrondis au niveau d'un bord de transition vers la surface de glissement (10).
